# EUROPEAN PATENT APPLICATION

(11) **EP 2 060 805 A1**
(43) Date of publication of application: **20.05.2009**
(21) Application number: 07022435.7
(22) Date of filing: 19.11.2007
(51) Int. Cl.: F16C 17/06

(54) **Method for producing a hydrodynamic thrust bearing and hydrodynamic thrust bearing**

(71) Applicant: DANMARKS TEKNISKE UNIVERSITET, 2800 Kgs. Lyngby (DK)
(72) Inventor: Klit, Peder, 3480 Fredensborg (DK); Thomsen, Kim, 7430 Ikast (DK)
(74) Representative: Jensen, Peter Kim

(57) **Abstract**

The invention relates to a method for producing a rotary hydrodynamic thrust bearing and to a rotary hydrodynamic thrust bearing. The thrust bearing comprises a first bearing part having a first bearing face and a second bearing face facing the first bearing face and being formed of pad bearing faces (5) of at least two pads (2), said pads being supported on a common base (4) by means of supporting means (3) allowing the pads to tilt slightly when subjected to an axial tilting load, one of said first and second bearing parts being rotatable relative to the other bearing part about a rotation axis in a rotational direction. The method comprises the steps of (a) providing a blank (100) for the second bearing part being essentially identical to the second bearing part apart from machining allowances on upper faces (105) of the pads (102) to be machined for forming the pad bearing faces (115), (b) using preloading means (116), simultaneously providing a predetermined substantially identical preload to each of the pads (102) of the second bearing part (101), thereby elastically deforming the pad (102) and/or the corresponding supporting means (103) so as to tilt the pad with respect to a resting position, (c) machining the upper faces of all pads to a common plane with the preload applied to all pads so as to obtain the pad bearing face of each of the pads, and (d) removing the preload from each pad so as to allow each pad to return to its resting position in which me bearing face thereof has a predetermined shoulder height (Sₙ).

## Description

The invention relates to a method for producing a rotary hydrodynamic thrust bearing, said thrust bearing comprising a first bearing part having a first bearing face and a second bearing part having a second bearing face facing the first bearing face and being formed of pad bearing faces of at least two pads, said pads being supported on a common base by means of supporting means allowing the pads to tilt slightly when subjected to an axial tilting load, one of said first and second bearing parts being rotatable relative to the other bearing part about a rotation axis in a rotational direction.

Hydrodynamic thrust bearings of the above-mentioned type are widely applied, for example in rotary pumps, such as submersible pumps. Under operation, the first bearing face and the second bearing face are separated from each other by a gap filled with a lubricant fluid film. In practice, the lubricant may be water or oil.

In practice, the first bearing part may be a runner that is attached to a shaft adapted to rotate around the rotation axis, and the second bearing part may be a bearing disk used as a stationary part of the hydrodynamic thrust bearing. The stationary part is typically fixed in relation to a frame or housing of the machinery comprising the hydrodynamic thrust bearing.

Under operation of the hydrodynamic thrust bearing, load is applied to the bearing disk, thereby deforming each of the pads and/or the corresponding elastic elements and providing a wedge shaped gap with a finite shoulder height between the pad bearing face and the first bearing face. The sliding motion of the runner over the pad entails a lubricant flow in a direction parallel to the runner motion, into the gap at a leading edge of the pad, through the gap over the pad bearing face and out of the gap at a trailing edge of the pad. The lubricant film thickness in the wedge shaped gap is larger by the shoulder height at the leading edge than at the trailing edge. The load carrying capacity of the hydrodynamic thrust bearing relies on the hydrodynamic pressure built up in the wedge shaped gap between the pad bearing face and the first bearing face.

The shape of the bearing pad, and in particular the geometry of the sliding surface, is important for the hydrodynamic pressure building up at a given rotation speed of the runner and thereby for the load-carrying capacity of the hydrodynamic thrust bearing.

Bearing disks of the above-mentioned kind produced using known methods have the disadvantage that the sliding surfaces of the bearing pads in their resting position, i.e. in the absence of any load, are essentially aligned in one plane parallel to the runner sliding surface. The formation of the wedge shaped gap requires a load for deforming the bearing pad and/or the elastic element. This is detrimental to a number of the operational properties of the hydrodynamic thrust bearing, such as friction loss and load carrying capacity, particularly in a start-up regime and at low runner velocities below a nominal rotation speed.

Furthermore, the deformation of the bearing pads under operation is very sensitive to variations in the geometrical parameters of the bearing pads and their elastic support. As a consequence, variations in the deformation directly affect the operational properties of the bearing disk. Bearing disks of the above-mentioned kind are therefore very sensitive to fabrication precision.

Therefore, there is a need for a method for producing a hydrodynamic thrust bearing comprising a bearing disk with substantially identical pads and with improved load carrying capacity.

An object of the present invention is to provide a simple and precise method for producing a hydrodynamic thrust bearing with improved operation properties and with an improved load carrying capacity.

A further object of the invention is to provide a hydrodynamic thrust bearing with improved operation properties and with an improved load carrying capacity.

According to the invention, this is achieved by a method comprising the steps of (a) providing a blank for the second bearing part being essentially identical to the second bearing part apart from machining allowances on upper faces of the pads to be machined for forming the pad bearing faces, (b) using preloading means, simultaneously providing a predetermined substantially identical preload to each of the pads of the second bearing part, thereby elastically deforming the pad and/or the corresponding supporting means so as to tilt the pad with respect to a resting position, (c) machining the upper faces of all pads to a common plane with the preload applied to all pads so as to obtain the pad bearing face of each of the pads, and (d) removing the preload from each pad so as to allow each pad to return to its resting position in which the bearing face thereof has a predetermined shoulder height.

The preloading means may comprise a displacement tool adapted to apply a force to corresponding contact points on each of the pads using manual actuation means, such as one or more adjustable set-screws, or power driven actuation means, such as an actuator of the jackscrew type, a hydraulic actuator, a pneumatic actuator, a piezoelectric actuator or the like. The contact points on the pads may be accessed from the backside of the bearing disk by protruding taps of the displacement tool reaching through holes or recesses in the base, or from a radial direction by forks or taps of the displacement tool reaching in between the common base and the pads.

The substantially identical preload may be applied as a substantially identical displacement imposed on the corresponding contact points on each of the bearing pads. Alternatively, the substantially identical preload may be applied as a substantially identical force applied to the corresponding contact points on each of the bearing pads.

As a result of the simultaneous deformation of all bearing pads by the substantially identical preload, substantially identical parts of the bearing pads protrude from the front side of the bearing disk. By face grinding/lapping the bearing disk from the front side on a common grinding/lapping surface with the preload applied to the bearing pads, the protruding parts can be removed and a substantially identical lapped region is provided on each of the bearing pads.

After relaxing the preload, the bearing pads and the elastic elements return to their resting position, wherein the lapped region on each of the pads forms a pad bearing face that in the resting position of the pads is inclined with respect to the first bearing face.

The method according to the invention has the advantage that the sliding surfaces of all bearing pads are ground/lapped simultaneously and in the same step, thereby achieving uniformly shaped wedges with shoulder heights that are substantially identical to within surprisingly small tolerances. In practice, the tolerances may achieve values well below 1 µm.

A further advantage of the method according to the invention is that it can be carried out using conventional planar surface grinding apparatus.

In a further embodiment of a method according to the invention, the preload is applied so as to slightly tilt the pad in a direction opposite to a nominal tilt under operational load.

The expression "slightly tilted" refers to a finite angle above zero degrees and below five degrees.

Under operation of the hydrodynamic thrust bearing, the first bearing part is moved with respect to the second bearing part so that the first bearing face moves in a direction of motion over the pad bearing face of each of the pads on the second bearing part. Furthermore, due to the load exerted on the pad under operation, the pad and/or the supporting element is deformed according to the load distribution over the pad bearing face. In practice, the pad is typically tilted so as to form a wedge ascending essentially in the direction of the direction of motion. This tilt may be referred to as the nominal tilt under operational load.

By slightly tilting the pad in a direction opposite to the nominal tilt under operation, and subsequently machining away the parts of the pad thus made to protrude from the second bearing face of the second bearing part, a pad bearing face is obtained that in the resting position of the pad is pre-tilted towards the tilt under operational load. Thereby a wedge shape with an inclined pad bearing face for building up a load carrying hydrodynamic pressure between the first bearing part and the second bearing part is already provided at start-up. The above-mentioned bias may be optimised for start-up and/or for a nominal rotational speed range for operation of the hydrodynamic thrust bearing.

Furthermore, due to the above-mentioned pre-tilt, an increased load bearing capacity is achieved independent of the deformability of the bearing pad and/or the corresponding elastic element. The shoulder height of the pre-tilt may be adjusted to the desired load carrying capacity, whereas the elasticity of the bearing pads and/or the corresponding elastic elements may be designed to improve adaptability of the bearing disk to different conditions under operation, such as to different loads and/or runner speeds.

In a further embodiment of the method according to the invention the preload is applied so as to incline the pad bearing face around a radial axis parallel to the first bearing face.

The respective radial axis, i.e. the radial axis in respect to a given pad, is a tilting axis for the given pad extending in a radial direction substantially perpendicular to the rotation axis. The tilting axis does not necessarily have to pass through the pad.

By applying the preload, the pad bearing face of each pad is slightly inclined in a direction that is substantially perpendicular to the radial direction and tangent to a circumferential direction.

By performing the subsequent face grinding / lapping step and releasing the preload, an inclined pad bearing face is obtained, where the direction of the steepest incline is essentially parallel to a circumferential direction.

In a further embodiment of the method according to the invention, only a portion, preferably a major portion of the pad is machined. The remaining portion of the pad bearing face is essentially parallel to the first bearing face, thereby providing a resting surface for the first bearing part at rest. A grinding step without preloading may be performed before or after the grinding/lapping with the preload applied for also grinding/lapping the resting surface.

In a further embodiment of the method according to the invention, the predetermined shoulder height is between 1 µm and 10 µm, alternative between 1 µm and 5 µm, alternative between 1 µm and 2 µm.

Due to the bias of the inclination with the above-mentioned predetermined shoulder height, an enhanced load carrying capacity is provided in particular at a minimum lubricant film thickness of below 3 µm.

Due to the surprisingly high precision that is achieved by the method for producing a bearing disk according to the invention, the hydrodynamic thrust bearing may be operated at a low minimum lubricant film thickness of below 20 µm, alternatively below 10 µm, and alternatively below 2 µm.

Thereby a bearing disk is obtained that is adapted for operation in a rotary hydrodynamic thrust bearing with a diameter of up to 20 cm, such as for application in submersible water pumps using water as a lubricant fluid.

In a further embodiment of the method according to the invention, the preload is applied so as to additionally tilt the pad around an axis being essentially tangent to a circumferential direction. Thereby the pad bearing faces obtained by the method according to the invention are pre-tilted in a direction different from the circumferential direction.

In a further embodiment of the method according to the invention, machining of the upper faces of the pads comprises grinding and/or lapping.

Advantageously, the grinding and/or lapping is performed on a planar face grinder in order to provide a simple and low-cost process, but other standard grinding and/or lapping apparatus may also be used.

In a further embodiment of the method according to the invention, the supporting means is relatively elastic compared to the pad. As a consequence, an external load applied to the pads on the second bearing part will essentially result in a deformation of the supporting element and a tilting of the pads without substantial deformation of the relatively stiff pads. Thereby an enhanced load carrying capacity over a wide range of minimum film thicknesses is achieved as compared to known methods.

In a further embodiment of the method according to the invention, the supporting means is a columnar stem. Thereby the pad is supported such that it can tilt around an essentially radial tilting axis and, additionally, around an axis essentially tangent to a circumferential direction. A columnar stem may be likened to a pivot support allowing the pad to tilt essentially freely in any direction depending on the load thereon.

In a further development of the above-mentioned embodiment of the method according to the invention, the stem is placed essentially centrally to the pad seen in radial direction.

In a further development of the above-mentioned embodiment of the method according to the invention, the stem is placed offset from the centre of the pad seen in circumferential direction so as to be placed 51 %-70%, preferably 55%-60%, of the distance between a first and a second radial edge of the pad from the first edge. Thereby an optimum load carrying capacity is achieved.

According to a further aspect of the invention, a rotary hydrodynamic thrust bearing comprises a first bearing part having a first bearing face and a second bearing part having a second bearing face facing the first bearing face and being formed of pad bearing faces of at least two pads, said pads being supported on a common base by means of supporting means allowing the pads to tilt slightly when subjected to an axial tilting load, one of said first and second bearing parts being rotatable relative to the other bearing part about a rotation axis in a rotational direction, wherein, in the absence of the above-mentioned axial tilting load, the pad bearing face of each pad is slightly inclined upward towards the first bearing face of the first bearing part seen in the rotational direction of the rotatable bearing part.

By supporting the pads on a common base, the second bearing part is provided as one piece, thereby facilitating assembly of the hydrodynamic thrust bearing.

The supporting means may for example be an elastic element in form of a rib extending radially essentially from an inner circumferential edge of the pad to an outer circumferential edge of the pad. Thereby the pad is supported such that it can tilt around an essentially radial tilting axis which preferably is parallel to the first bearing face.

Further, in their resting position, the bearing pads are provided with inclined pad bearing faces. The pad thus provides a finite shoulder height in the absence of any load, which finite shoulder height is larger than zero. In rotary hydrodynamic thrust bearings with a diameter of below 20 cm, such as those employed in rotary submersible water pumps, the shoulder height is typically between 2 µm and 15 µm.

Due to the inclined pad bearing faces, it is, in particular in a start-up phase, easier for the pads to adjust and start carrying the load by building up a load carrying hydrodynamic pressure between the first and the second bearing parts of the hydrodynamic thrust bearing.

Thereby an enhanced bearing load carrying capacity can be achieved already in the start-up phase as compared to a hydrodynamic thrust bearing with an unprocessed second bearing part.

In a further embodiment of the rotary hydrodynamic thrust bearing according to the invention, the supporting means is relatively elastic compared to the pad.

An external load applied to the pads on the second bearing part will essentially result in a deformation of the supporting element and a tilting of the pads without substantial deformation of the relatively stiff pads. Thereby an enhanced load carrying capacity over a wide range of minimum film thicknesses is achieved as compared to known thrust bearings.

In a further embodiment of the rotary hydrodynamic thrust bearing according to the invention, the supporting means is a columnar stem. Thereby the pad is supported such that it can tilt around an essentially radial tilting axis and, additionally, around an axis essentially tangent to a circumferential direction. A columnar stem may thus be likened to a pivot support allowing the pad to tilt essentially freely in any direction depending on the load thereon.

In a further embodiment of the rotary hydrodynamic thrust bearing according to the invention, the stem is placed essentially centrally to the pad seen in radial direction.

In a further embodiment of the rotary hydrodynamic thrust bearing according to the invention, the stem is placed offset from the centre of the pad seen in circumferential direction so as to be placed 51%-70%, preferably 55%-60% of the distance between a first and a second radial edge of the pad from the first edge. Thereby an optimum load carrying capacity is achieved.

In a preferred embodiment of the rotary hydrodynamic thrust bearing according to the invention, the pads, the supporting means and the base are integrally formed.

In practice, the second bearing part comprising the pads, the supporting means and the common base may be a unit that is cast in one piece, thereby reducing production and assembly cost for the hydrodynamic thrust bearing.

In a further embodiment of a rotary hydrodynamic thrust bearing according to the invention, the first bearing part is the part being rotatable. Typically, the first bearing part has a simple, substantially flat first bearing face and is therefore typically less complex to produce and may be more easily provided on a rotary shaft or other rotary machinery parts. Therefore, it is advantageous to provide the first bearing part as the rotatable part.

In this case, the second bearing part is the stationary part of the rotary hydrodynamic thrust bearing and is typically arranged in a frame or a housing so as to lock the second bearing part against rotation.

In a further embodiment of a rotary hydrodynamic thrust bearing according to the invention, the second bearing part comprises at least three pads. Each pad provides a local hydrodynamic pressure build-up. Thereby a stable support for the first bearing part is provided. In practice, a typical arrangement contains a number of six pads, or alternatively four pads.

In the following, the invention will be explained further with reference to the drawing. The drawing shows in
Fig. 1 a perspective view of one embodiment of a second bearing part, in the following referred to as a bearing disk for a hydrodynamic thrust bearing according to the invention,
Fig. 2 a top view of the bearing disk in Fig. 1,
Fig. 3 a cross-sectional view of the bearing disk along line A-A in Fig. 2, and
Fig. 4a-4d schematically, subsequent steps of an embodiment of the method according to the invention.

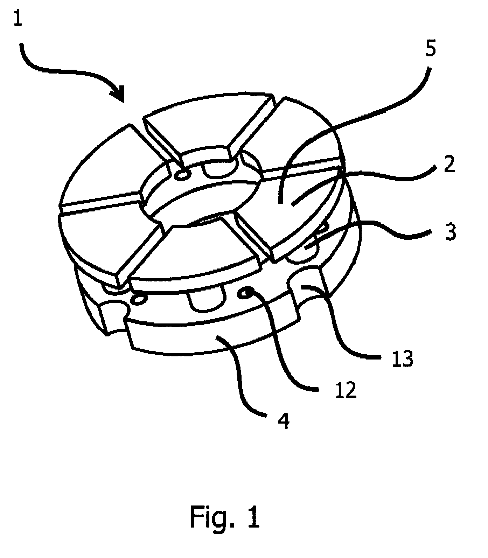

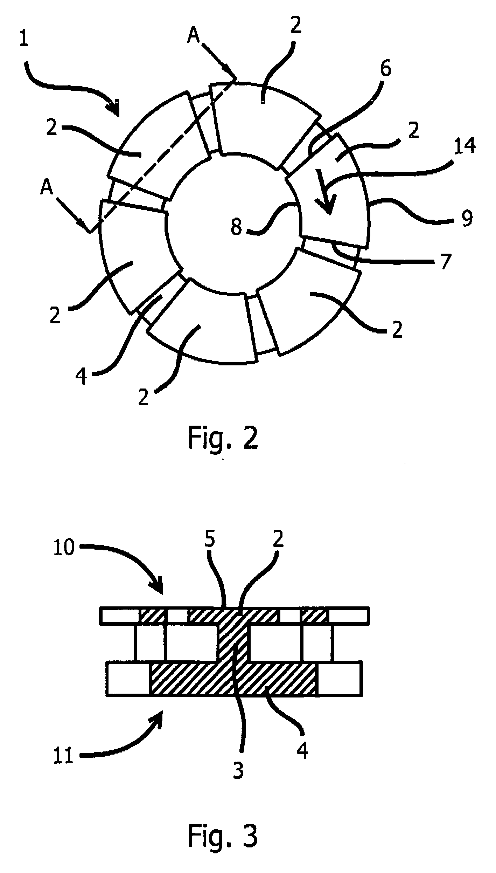

One embodiment of a second bearing part, in the following referred to as a bearing disk 1, for a hydrodynamic thrust bearing according to the invention is now described with reference to Figs. 1-3.

As shown in Figs. 1-3, an arrangement of six segmented bearing pads 2 forming a ring shaped bearing face is provided on a front side 10 of the bearing disk 1, each bearing pad 2 being connected via supporting means 3 with a common base 4 arranged at the back side 11 of the bearing disk 1. Each bearing pad 2 is tiltable around a radial axis and optionally also around a tangential axis, i.e. an axis tangent to the circumferential direction.

Each bearing pad 2 is provided with a pad bearing face 5 bounded by a first radial edge 6, a second radial edge 7, an inner circumferential edge 8 and an outer circumferential edge 9.

The bearing disk shown in Figs. 1-3 is adapted for use as the stationary part in a hydrodynamic thrust bearing with first bearing part, also called "runner", having a first bearing face facing the second bearing face of the bearing disk and being separated from the second bearing face by a lubricant fluid film. The runner is arranged on a shaft adapted to rotate around a rotation axis such that the first bearing face under operation moves over the bearing pads 2 in a direction from the first radial edge 6 towards the second radial edge 7.

A recess 12 may be provided on the base 4 adapted to engage with a corresponding tap in a bearing housing in order to lock the bearing disk 1 against rotation.

Below each of the six bearing pads 2, a corresponding access hole 13 may be provided in the base 4. The access hole 13 gives access for applying a force for the deformation of the bearing pad 2 and/or the supporting means 3 from the back side 11 of the bearing disk 1.

The pad bearing face 5 of each pad is inclined ascending in the direction of the arrow 14 corresponding to the direction of rotation of the runner.

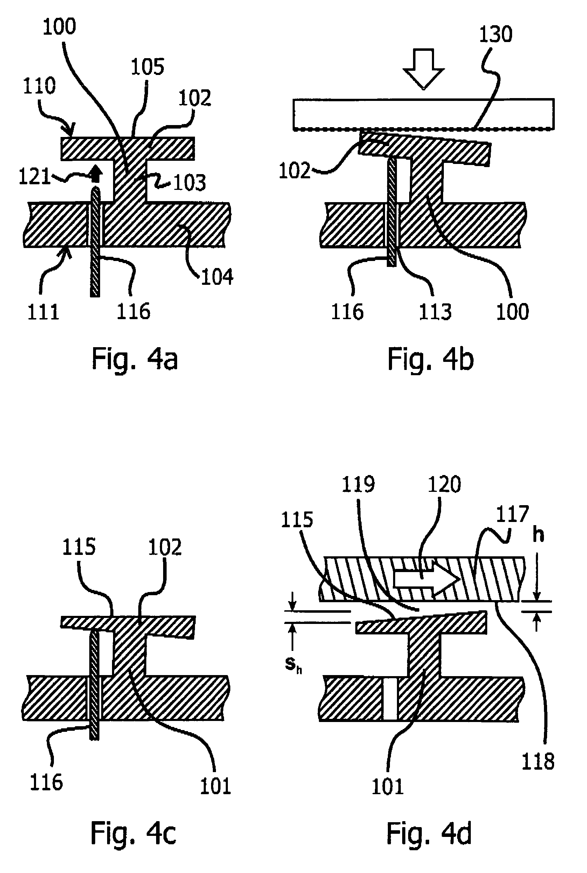

In certain applications, such as rotary submersion pumps for pumping water and using water as a lubricant, a shoulder height sₕ of between 1 µm-10 µm, alternatively 1 µm-5 µm, or alternatively 1 µm-2 µm is chosen. The shoulder height sₕ is defined as the height of the inclination of the pad bearing face 5 measured at the centre of the pad in the circumferential direction as shown in Fig. 4d.

In one embodiment according to the invention, the supporting means 3 is an elastic element, such as a columnar stem, extending from a backward facing side of the bearing pad to the base 4, as shown in Fig. 1. In a radial direction, the supporting elastic element 3 may be placed approximately midways between the inner circumferential edge 8 and the outer circumferential edge 9. In a circumferential direction, the elastic element 3 may be placed shifted away from the centre towards the second radial edge 7 such that the distance from the first radial edge 6 to the elastic element 3 corresponds to between 50% and 70%, preferably between 55% and 60%, of the circumferential distance between the first radial edge 6 and the second radial edge 7.

Reference is now made to Figs. 4a-4d, schematically showing one embodiment of a method for producing a bearing disk.

First a blank 100 for a bearing disk 101 is provided. The blank 100 for the bearing disk 101 is cast as a single piece comprising a base 104, supporting means 103 and bearing pads 102. On the front side 110, the blank 100 is not lapped/ground and the unlapped/unground pad bearing faces 105 are arranged in essentially the same plane.

Fig. 4a shows a blank 100 with a preloading tool in the form of a displacement tool 116 inserted from the back side 111 through an access hole 113 and in contact with a bearing pad 102. As shown in Fig. 4b, the bearing pad 102 is deformed by the preload applied via the displacement tool 116, for example in an axial direction as indicated by the arrow 121. The bearing disk blank 100 with the preload applied may then be ground and/or lapped on a common grinding surface 130 using a standard face grinder (Fig. 4b, Fig. 4c). After the face grinding/lapping is finished and the preload removed, the finished bearing disk 101 is obtained with bearing pads 102 exhibiting a lapped/ground inclined pad bearing face 115 with a shoulder height sₕ (Fig. 4d). A runner 117 is adapted to move in the direction of the arrow 120 and is placed with its bearing face 118 facing towards the lapped pad bearing face 115, thus forming a wedge shaped gap 119 pointing in the direction of the motion of the runner 120. The wedge shaped gap 119 provides for a minimum lubricant fluid film thickness h.

The invention has been described with reference to preferred embodiments. However, the scope of the invention is not limited to the illustrated embodiments, and alterations and modifications can be carried out without deviating from the scope of the invention.

For example, the arrangement of six bearing pads may be replaced by analogous arrangements of two or more bearing pads.

Furthermore it is conceivable to repeatedly perform grinding/lapping steps with a different preload applied in each step, thereby obtaining an essentially curved/facetted pad bearing face of the bearing pads.

Furthermore, while the invention is explained on the basis of a hydrodynamic thrust bearing construction where the bearing disk with elastically supported bearing pad segments is provided on the stationary part of the hydrodynamic thrust bearing, and the runner bearing surface is planar, the opposite case may also be conceived, without leaving the scope of this invention.

### List of reference numerals

- 100: blank
- 1, 101: bearing disk
- 2, 102: bearing pad
- 3, 103: supporting means
- 4, 104: base
- 5, 105: pad bearing face
- 6, 106: first radial edge
- 7, 107: second radial edge
- 8: inner circumferential edge
- 9: outer circumferential edge
- 10, 110: front side
- 11, 111: back side
- 12: recess
- 13, 113: access hole
- 14: arrow (direction of ascending wedge inclination)
- 115: pad bearing face
- 116: displacement tool
- 117: first bearing part
- 118: first bearing face
- 119: wedge shaped gap
- 120: arrow (rotation direction)
- 121: arrow (axial direction)
- 130: grinding surface

## Claims

1. Method for producing a second bearing part for a rotary hydrodynamic thrust bearing,
said thrust bearing further comprising a first bearing part (117) having a first bearing face (118), said first bearing part (117) and said second bearing part (101) being mutually rotatable about a rotation axis, and
said second bearing part (101) having a second bearing face facing the first bearing face and being formed of pad bearing faces (115) of at least two pads (102), said pads (102) being supported on a common base (104) by means of supporting means (103) allowing the pads (102) to tilt slightly in relation to a resting position when subjected to an axial tilting load,
said method comprising the steps of:
a) providing a blank (100) for the second bearing part being essentially identical to the second bearing part apart from machining allowances on upper faces (105) of the pads (102) to be machined for forming the pad bearing faces (115),
b) using preloading means (116), simultaneously providing a predetermined substantially identical preload to each of the pads (102) of the second bearing part (101), thereby elastically deforming the pad (102) and/or the corresponding supporting means (103) so as to tilt the pad with respect to a resting position,
c) machining the upper faces of all pads (102) to a common plane with the preload applied to all pads (102) so as to obtain the pad bearing face (115) of each of the pads (102), and
d) removing the preload from each pad (102) so as to allow each pad (102) to return to its resting position in which the bearing face (115) thereof has a predetermined shoulder height (sₕ).

2. Method according to claim 1, wherein the preload is applied so as to tilt the pad (102) around an essentially radial tilting axis which preferably is parallel to the first bearing face (118).

3. Method according to claim 2, wherein the preload is applied so as to additionally tilt the pad (102) around an axis essentially tangent to a circumferential direction.

4. Method according to any of the preceding claims, wherein machining of the upper faces (105) of the pads (102) comprises grinding and/or lapping.

5. Method according to any of the preceding claims, wherein the supporting means (103) is relatively elastic compared to the pad (102).

6. Method according to any of the preceding claims, wherein the supporting means (103) is a columnar stem.

7. Method according to claim 6, wherein the stem is placed essentially centrally to the pad (102) seen in radial direction.

8. Method according to any of the claims 6 or 7, wherein the stem is placed offset from the centre of the pad (102) seen in circumferential direction so as to be placed 51%-70%, preferably 55%-60%, of the distance between a first radial edge (106) and a second radial edge (107) of the pad from the first radial edge (106).

9. Rotary hydrodynamic thrust bearing comprising a first bearing part having a first bearing face and a second bearing part (1) having a second bearing face facing the first bearing face and being formed of pad bearing faces (5) of at least two pads (2), said pads (2) being supported on a common base (4) by means of supporting means (3) allowing the pads (2) to tilt slightly when subjected to an axial tilting load, one of said first and second bearing parts being rotatable relative to the other bearing part about a rotation axis in a rotational direction **characterized in that**, in the absence of said axial tilting load, the pad bearing face (5) of each pad (2) is slightly inclined upward towards the first bearing face of the first bearing part seen in the rotational direction of the rotatable bearing part.

10. Rotary hydrodynamic thrust bearing according to claim 9, wherein the supporting means (3) is relatively elastic compared to the pad (2).

11. Rotary hydrodynamic thrust bearing according to any of the claims 9 or 10, wherein the supporting means (3) is a columnar stem.

12. Rotary hydrodynamic thrust bearing according to claim 11, wherein the stem is placed essentially centrally to the pad (2) seen in radial direction.

13. Rotary hydrodynamic thrust bearing according to any of the claims 11 or 12, wherein the stem is placed offset from the centre of the pad seen in circumferential direction so as to be placed 51%-70%, preferably 55%-60%, of the distance between a first and a second radial edge of the pad (2) from the first edge.

14. Rotary hydrodynamic thrust bearing according to any of the claims 9-13, wherein the pads (2), the supporting means (3) and the base (4) are integrally formed.
